# EUROPEAN PATENT SPECIFICATION

(11) **EP 3 229 146 B1**
(45) Date of publication and mention of the grant of the patent: **26.10.2022**
(21) Application number: 14908783.5
(22) Date of filing: 25.12.2014
(51) Int. Cl.: G06F 13/38, G06F 13/42

(54) **SYSTEM AND DEVICE FOR IDENTIFYING USB OTG DEVICE**
SYSTEM UND VORRICHTUNG ZUR IDENTIFIZIERUNG EINER USB-OTG-VORRICHTUNG
SYSTÈME ET DISPOSITIF PERMETTANT D'IDENTIFIER UN DISPOSITIF USB OTG

(43) Date of publication of application: 11.10.2017
(73) Proprietor: Huawei Technologies Co., Ltd., Shenzhen, Guangdong 518129 (CN)
(72) Inventor: HU, Zhengyuan, Shenzhen Guangdong 518129 (CN)
(74) Representative: Pfenning, Meinig & Partner mbB
(86) International application number: PCT/CN2014/094966
(87) International publication number: WO 2016/101215

(56) References cited:
- EP-A2- 2 650 752
- CN-A- 101 359 316
- CN-A- 103 559 149
- US-A1- 2009 198 841
- US-A1- 2012 271 979

## Description

### TECHNICAL FIELD

The present invention relates to the field of communications technologies, and in particular, to a USB OTG device identification system and a terminal device.

### BACKGROUND

A Universal Serial Bus (Universal Serial Bus, USB) On-The-Go (On The Go, OTG) technology transfers data between devices without a host device (Host). A terminal device supporting a USB OTG function (terminal device for short) may support one or more OTG devices having different functions, and the terminal device needs to learn a device type of a connected OTG device before loading a corresponding driver or configuration to support the device.

An existing USB OTG protocol is used in the prior art. If a terminal device supporting a USB OTG function needs to support multiple different types of OTG devices, a control entry such as an APP needs to be added to the terminal device, so as to determine a device type of a connected OTG device by means of manual selection and setting. In the prior art, the corresponding connected OTG device needs to be selected manually, and the terminal device can determine the device type of the connected OTG device only in a manual selection manner. Therefore, operations are inflexible, and user experience is poor.
EP 2650752 A2 discloses a terminal device and a power supply method for terminal device. US2009/198841 A1 discloses an interface detecting circuit and an interface detecting method.

### SUMMARY

The invention is set out in the appended set of claims. Embodiments of the present invention provide a USB OTG device identification system and a terminal device. A terminal device determines a device type of an OTG device by using a built-in resistor of the OTG device, transfer the device type of the OTG device to a USB OTG protocol stack, and transfer data to the OTG device by using a USB OTG protocol, which improves operation flexibility of OTG device identification, and enhances convenience of data interaction between the terminal device and the OTG device.
A USB OTG device identification system, and a terminal device according to the independent claims are provided. Dependent claims provide preferred embodiments.

A first aspect of the embodiments of the present invention provides a terminal device, which includes a processor, a first Universal Serial Bus USB connector, and a first resistor, where
the processor includes an analog to digital converter ADC, a general purpose input/output GPIO module, and a USB physical layer USB_PHY module connected to the GPIO module, where pins of the first USB connector include a first ID signal pin;
one end of the first ID signal pin is separately connected to the ADC and the GPIO module, and is connected to a power supply by means of the first resistor, and the other end of the first ID signal pin is connected to an OTG device;
when the first ID signal pin is connected to a second ID signal pin of the OTG device, the terminal device obtains a voltage value of the first ID signal pin by using the ADC;
if the voltage value is not zero, the terminal device determines a resistance value of a second resistor of the OTG device according to the voltage value, a voltage value of the power supply, and a resistance value of the first resistor; and
the terminal device determines a device type of the OTG device according to the resistance value of the second resistor, and sends the device type of the OTG device to the USB_PHY module by using the GPIO module, wherein the USB_PHY module is configured to support a USB standard interface to process output data or input data from the first USB connector, and triggers, by using the USB_PHY module, a USB OTG protocol stack to load a driver or a configuration corresponding to the device type;
if the voltage value is zero, determining that the OTG device is a standard OTG device; and triggering, by using the USB_PHY module, the USB protocol stack to load a driver or a configuration corresponding to the standard OTG device.

With reference to the first aspect, in a first possible implementation manner, the terminal device is specifically configured to:
if the voltage value of the first ID signal pin is not zero, determine a voltage value applied to the first resistor according to the voltage value of the first ID signal pin and the voltage value of the power supply; and
determine the resistance value of the second resistor according to the voltage value applied to the first resistor and the resistance value of the first resistor and in combination with the voltage value of the first ID signal pin.

With reference to any one of the first aspect to the first possible implementation manner of the first aspect, in a second possible implementation manner, before the OTG device is connected to the terminal device, the first ID signal pin is unconnected, where
when the first ID signal pin is unconnected, a level of the first ID signal pin is in a high-impedance state.

With reference to the second possible implementation manner of the first aspect, in a third possible implementation manner, the terminal device is further configured to:
when the ADC detects that the level of the first ID signal pin is in a low-level state, determine that the first ID signal pin is connected to an OTG device.

With reference to the first aspect to the third possible implementation manner of the first aspect, in a fourth possible implementation manner, the pins of the first USB connector further include a data transmission pin;
the data transmission pin is connected to the USB_PHY module; and
the terminal device is further configured to:
   process input data or output data from the data transmission pin of the first USB connector by using the USB_PHY module.
   A second aspect of the embodiments of the present invention provides a USB OTG device identification system, which includes a terminal device according to any one of the first aspect to the fourth possible implementation manner of the first aspect and an On-The-Go OTG device, where
   the OTG device includes a second USB connector, where pins of the second USB connector include a second ID signal pin, one end of the second ID signal pin is connected to the first ID signal pin, and the other end of the second ID signal pin is grounded by means of a second resistor.

In the system described in the embodiments of the present invention, when an OTG device is connected, a terminal device determines, according to a voltage value of an ID signal pin of a USB connector, a voltage value of a power supply, and a built-in resistor of the terminal device, a resistance value of a built-in resistor of the OTG device, then determines a device type of the OTG device according to the resistance value of the built-in resistor of the OTG device, and then transfers the device type of the OTG device to a USB OTG protocol stack, loads a corresponding driver or configuration by using the USB OTG protocol stack, and transfers data to the OTG device. The USB OTG device identification method described in the embodiments of the present invention can support a standard protocol, and can further improve operation flexibility of OTG device identification, and enhance convenience of data interaction between a terminal device and an OTG device.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention.
FIG. 1 is a schematic diagram of a system including devices supporting a USB OTG protocol in the prior art;
FIG. 2 is a schematic flowchart of an implementation manner of supporting an OTG device by a terminal device in the prior art;
FIG. 3 is a schematic structural diagram of an embodiment of a USB OTG device identification system according to an embodiment of the present invention;
FIG. 4 is a schematic flowchart of an embodiment of a USB OTG device identification system according to an embodiment of the present invention;
FIG. 5 is a schematic structural diagram of an embodiment of a terminal device according to an embodiment of the present invention; and
FIG. 6 is a schematic structural diagram of an embodiment of an OTG device according to an embodiment of the present invention.

### DESCRIPTION OF EMBODIMENTS

The following clearly and completely describes the technical solutions in the embodiments of the present invention with reference to the accompanying drawings in the embodiments of the present invention.

In the prior art, an interface of a USB connector is a master/slave interface, and a host device, that is, a host, is needed during data transmission, while a USB OTG technology transfers data between devices without a host. A terminal supporting a USB OTG function (that is, a terminal device described in the embodiments of the present invention) is in a Device (Device) state when the terminal is used individually. When an OTG device is connected, a device type identity (Identity, ID for short) signal in USB standard signals is weakened, so that the terminal device switches to a Host state from the Device state, and then interaction between the two devices may be implemented.

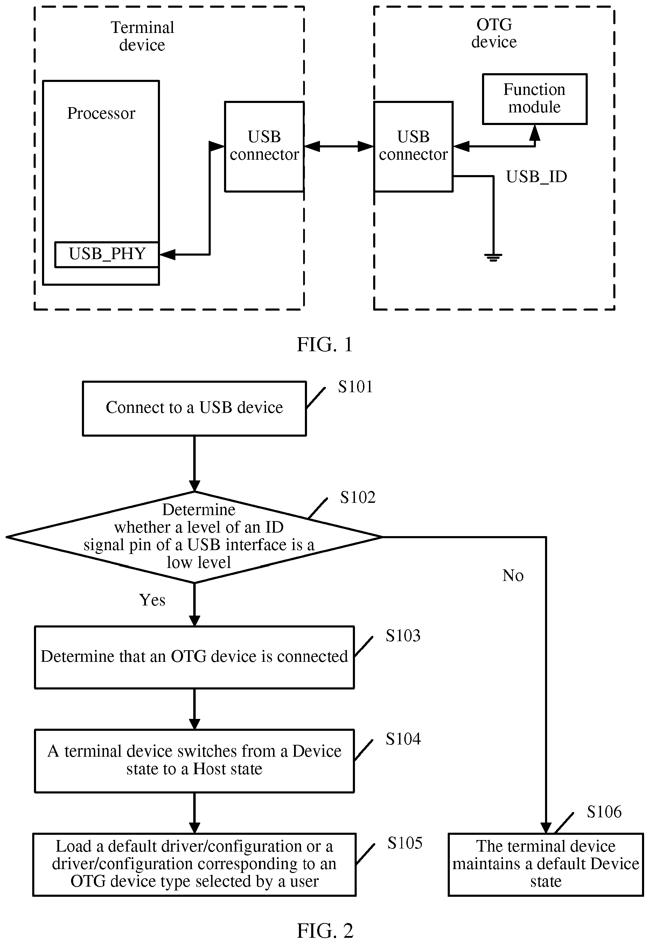

Referring to FIG. 1, FIG. 1 is a schematic diagram of a system including devices supporting a USB OTG protocol in the prior art. As shown in FIG. 1, the system including devices supporting a USB OTG protocol provided in the prior art includes a terminal device supporting a USB OTG function and an OTG device. The terminal device includes a processor and a USB connector. The processor includes a USB_PHY module. The USB_PHY module is configured to support a USB standard interface. The USB_PHY module can process output data or input data from the USB connector. Pins of the USB connector include an ID signal pin, and the ID signal pin of the USB connector may be configured to connect to the OTG device. An implementation manner of supporting the USB OTG device by the terminal device provided in the prior art is briefly described below with reference to FIG. 2.

Referring to FIG. 2, FIG. 2 is a schematic flowchart of an implementation manner of supporting an OTG device by a terminal device in the prior art. The implementation manner provided in the prior art includes the following steps.

S101: Connect to a USB device.

In the prior art, a USB device may establish a connection to a terminal device by means of a USB connector of the terminal device, and the terminal device may detect, by using a USB interface of the terminal device, whether a USB device is connected. If a USB device is connected, whether the connected USB device is an OTG device may be further determined.

S 102: Determine whether a level of an ID signal pin of a USB interface is a low level, and if a determining result is yes, perform step S 103, or if the determining result is no, perform step S 106.

In the prior art, before an OTG device is connected to the terminal device, an ID signal pin of the USB connector of the terminal device is in an unconnected state, and the OTG device may be connected to the terminal device by means of the ID signal pin. When the ID signal pin of the USB connector is unconnected, a level of the ID signal pin is in a high-impedance state, and when the OTG device is connected by means of the ID signal pin of the USB connector of the terminal device, the level of the ID signal pin may be weakened. In the prior art, when the USB connector of the terminal device is connected to a device, if it is detected that the level of the ID signal pin of the USB connector of the terminal device is a low level, the terminal device may determine that the connected USB device is an OTG device. If the level of the ID signal pin of the USB interface is still in a high-impedance state, it may be determined that the connected USB device is not an OTG device, and the terminal device continues to maintain a default Device state.

S 103: Determine that an OTG device is connected.

In the prior art, when the USB connector is connected to a USB device, and the level of the ID signal pin of the USB connector is a low level after the USB device is connected, it may be determined that an OTG device is connected, that is, the USB device connected to the USB connector is an OTG device.

S 104: A terminal device switches from a Device state to a Host state.

In the prior art, when the terminal device determines that an OTG device is connected, the terminal device may switch from a Device state to a Host state, and then may implement data interaction with the OTG device. Specifically, in the prior art, a USB_PHY module built in a processor of the terminal device is directly connected to the USB connector. When the level of the ID signal pin of the USB connector is a low level, an ID signal pin of the USB_PHY module also has a low level, which may trigger the terminal device to switch from a Device state to a Host state, and trigger, by using the USB_PHY module, a USB OTG protocol stack to load a corresponding driver or configuration, so as to support data interaction between the terminal device and the OTG device.

S105: Load a default driver/configuration or a driver/configuration corresponding to an OTG device type selected by a user.

In the prior art, after switching a status of the terminal device from a Device state to a Host state, the terminal device may load a default driver and/or configuration by using the USB OTG protocol stack. When the terminal device supports an OTG device having only one function (that is, a standard OTG device, where an ID signal pin of a USB connector of the standard OTG device is directly grounded), when the OTG device is connected, the terminal device does not need to determine a device type of the OTG device, and directly loads a default driver or configuration corresponding to the standard OTG device, and then may implement data interaction with the OTG device. When the terminal device can support OTG devices having multiple different types of functions, if it is detected that an OTG device is connected, the terminal device cannot independently determine a device function of the connected OTG device, that is, the terminal device cannot determine a device type of the OTG device. The terminal device can determine the device type of the connected OTG device only by means of manual selection by the user, and then loads a driver/configuration corresponding to the OTG device. In the prior art, a control entry such as an APP needs to be added to the terminal device, so as to inform, by means of manual selection, the terminal device of a driver that needs to be loaded into the connected OTG device, and the terminal device determines, in the manual selection manner, the driver or a configuration that needs to be loaded, and then loads the corresponding driver or configuration to support the OTG device.

S 106: The terminal device maintains a default Device state.

In the prior art, when the terminal device detects that the connected USB device is not an OTG device, the terminal device may maintain a default Device state.

To sum up, in the prior art, when a terminal device can support OTG devices having different functions, the terminal cannot independently determine a function of an OTG device, that is, a device type of the OTG device, and cannot directly load a corresponding driver or configuration according to a determined device type of the OTG device, and needs to determine, in a manual selection manner, the driver or configuration that needs to be loaded. Therefore, operations are complex and inflexible, and user experience is poor.

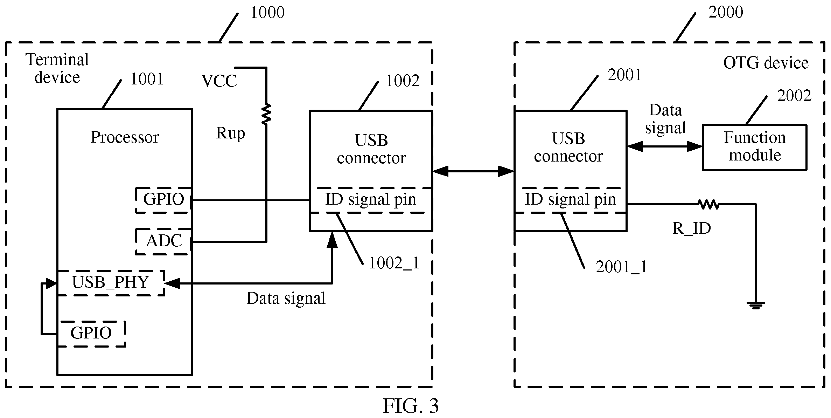

In view of the disadvantages in the prior art, in the embodiments of the present invention, on the basis of supporting an existing USB protocol (including a USB slave protocol such as a USB OTG protocol), automatic identification of an OTG device is implemented, and a corresponding driver or configuration is loaded according to an identified device type of the OTG device. A USB OTG device identification system and an apparatus provided in the embodiments of the present invention are specifically described below with reference to FIG. 3 to FIG. 6.

In specific implementation, the terminal device described in the embodiments of the present invention may specifically include: a mobile phone, a tablet computer, a personal digital assistant (Personal Digital Assistant, PDA), a Walkman, or the like. The terminal devices are merely examples, but not listed exhaustively. The terminal device includes, but is not limited to, the terminal devices.

In specific implementation, the embodiments of the present invention improve a system structure of an existing terminal device supporting the USB OTG protocol, and implement automatic identification of a device type of a connected OTG device by improving structures of the terminal device and the OTG device.

Referring to FIG. 3, FIG. 3 is a schematic structural diagram of a USB OTG device identification system according to an embodiment of the present invention. The USB OTG device identification system provided in this embodiment of the present invention includes a terminal device 1000 and an OTG device 2000.

The terminal device 1000 includes a processor 1001, a first Universal Serial Bus USB connector 1002, and a first resistor Rup, where the processor 1001 includes an analog to digital converter (Analog-to-Digital Convert, ADC), a GPIO module, and a USB physical layer USB_PHY module connected to the GPIO module, where pins of the first USB connector 1002 include a first ID signal pin 1002_1.

One end of the first ID signal pin 1002_1 is separately connected to the ADC and the GPIO module, and is connected to a power supply VCC by means of the first resistor Rup, and the other end of the first ID signal pin 1002_1 is connected to the OTG device 2000.

The OTG device 2000 includes a second USB connector 2001, where pins of the second USB connector 2001 include a second ID signal pin 2001_1, one end of the second ID signal pin 2001_1 is connected to the first ID signal pin 1002_1, and the other end of the second ID signal pin 2001_1 is grounded by means of a second resistor R_ID.

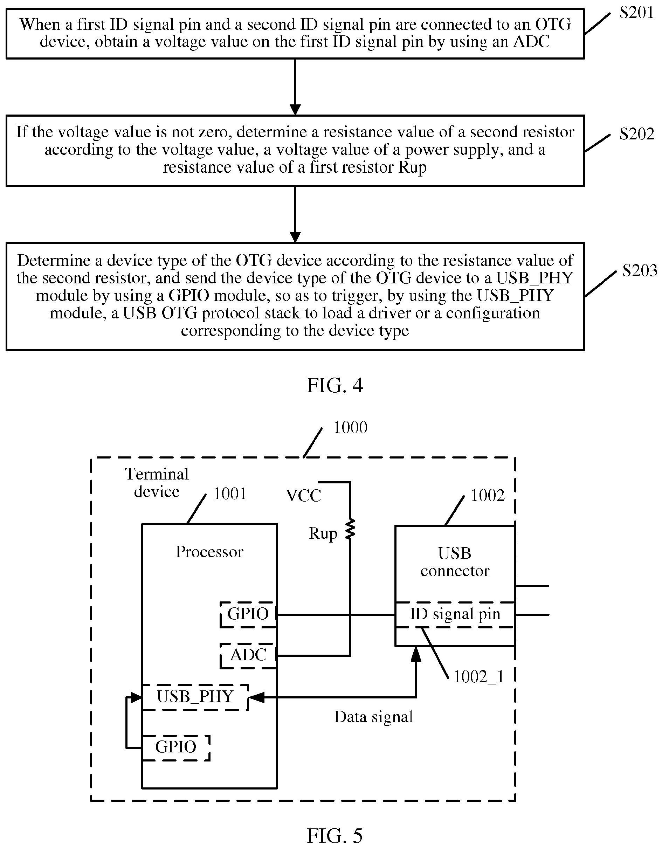

In the system described in this embodiment of the present invention, a built-in resistor, that is, the second resistor R_ID, of an existing OTG device 2000 is added to the OTG device 2000. The ID signal pin 1002_1 of the USB connector 1002 of the terminal device 1000 is grounded by means of the second resistor R_ID of the OTG device 2000. The second resistor R_ID of the OTG device 2000 may divide a voltage with the first resistor Rup in the terminal device 1000, where a sum of voltages applied to the first resistor Rup and the second resistor R_ID is equal to a voltage VCC of the power supply. The voltage value applied to the second resistor R_ID of the OTG device 2000 is a voltage value of the second ID signal pin 2001_1 of the OTG device 2000. The OTG device 2000 is connected to the first ID signal pin 1002_1 of the terminal device 1000 by means of the second ID signal pin 2001_1; therefore, the voltage value applied to the second resistor R_ID of the OTG device 2000 is also a voltage value of the first ID signal pin 1002_1 of the first USB connector 1002 of the terminal device. The terminal device determines, by detecting the voltage value of the first ID signal pin 1002_1 of the first USB connector 1002 of the terminal device, the voltage value applied to the second resistor R_ID built in the OTG device 2000, then determines a resistance value of the second resistor R_ID according to a resistance value of the first resistor Rup, and then determines a device type of the OTG device according to the resistance value of the second resistor R_ID. A specific implementation process for the USB OTG device identification system provided in this embodiment of the present invention is described below with reference to FIG. 4.

Referring to FIG. 4, FIG. 4 is a schematic flowchart of an embodiment of a USB OTG device identification system according to an embodiment of the present invention. The USB OTG device identification method described in this embodiment includes the following steps.

S201: When the first ID signal pin is connected to the second ID signal pin, obtain a voltage value of the first ID signal pin by using the ADC.

In some feasible implementation manners, the USB OTG device identification system described in this embodiment of the present invention may identify the device type of the OTG device 2000 connected to the terminal device 1000 by using the terminal device 1000. An implementation process of identifying the device type of the OTG device 2000 by the USB OTG device identification system described in this embodiment of the present invention is specifically described below by using the terminal device 1000 as an execution body.

In some feasible implementation manners, the first USB connector 1002 of the terminal device 1000 may be configured to connect to a USB device, and the OTG device 2000 may also establish a connection to the terminal device 1000 by means of the first USB connector 1002. In specific implementation, when the second USB connector 2001 of the OTG device 2000 is connected to the first USB connector 1002 of the terminal device 1000, a connection may be established by using the ID signal pin of the first USB connector 1002. The first ID signal pin 1002_1 of the first USB connector 1002 of the terminal device is in an unconnected state before the OTG device 2000 is connected. When the first ID signal pin 1002_1 is unconnected, a level of the first ID signal pin 1002_1 is in a high-impedance state. When a USB device connected to the first USB connector 1002 of the terminal device is an OTG device, the first ID signal pin 1002_1 of the first USB connector 1002 may be connected to the second ID signal pin 2001_1 of the second USB connector 2001 of the OTG device 2000, and may be grounded by means of the second resistor R_ID of the OTG device, which then may weaken the level of the first ID signal pin 1002_1, that is, in this case, the level of the first ID signal pin 1002_1 is in a low-level state.

In some feasible implementation manners, when the first ID signal pin 1002_1 of the first USB connector 1002 of the terminal device 1000 is connected to the second ID signal pin 2001_1 of the second USB connector 2001 of the OTG device 2000, the terminal device 1000 may switch an operation status of the terminal device 1000 from a Device state to a Host state, so as to implement data interaction with the OTG device 2000. The terminal device 1000 obtains a voltage value of the first ID signal pin 1002_1 by using the ADC in the processor 1001 built in the terminal device 1000, and then determines, according to the voltage value of the first ID signal pin 1002_1, the device type of the OTG device 2000 connected to the terminal device 1000.

S202: If the voltage value is not zero, determine a resistance value of the second resistor according to the voltage value, a voltage value of the power supply, and a resistance value of the first resistor.

In some feasible implementation manners, if the terminal device determines that the connected USB device is an OTG device, the terminal device further determines a device type of the connected OTG device. Specifically, the terminal device 1000 obtains the voltage value of the first ID signal pin 1002_1 of the first USB connector 1002 by using a sampling interface of the ADC module in the processor 1001 built in the terminal device 1000, and then determines the device type of the connected OTG device according to the voltage value of the first ID signal pin 1002_1. In specific implementation, if the OTG device connected to the terminal device 1000 is a standard OTG device, because a second ID signal pin of the standard OTG device is directly grounded, as shown in FIG. 1, in this case, a voltage value of the ID signal pin of the OTG device is a ground voltage, that is, zero. The ID signal pin of the OTG device is directly connected to the first ID signal pin 1002_1 of the terminal device; therefore, in this case, the voltage value of the first ID signal pin 1002_1 of the terminal device 1000 is zero. When the OTG device connected to the terminal device is a standard OTG device, the terminal device triggers, in an implementation manner provided in a standard USB OTG protocol and directly by using the USB_PHY module, a USB OTG protocol stack to load a driver or configuration corresponding to the standard OTG device, which is not described herein again.

In some feasible implementation manners, the OTG device 2000 connected to the terminal device 1000 is not a standard OTG device, as shown in FIG. 3. As shown in FIG. 3, one end of the first ID signal pin 1002_1 of the first USB connector 1002 of the terminal device is connected to the power supply by means of the first resistor Rup of the terminal device, and the other end of the first ID signal pin 1002_1 of the first USB connector 1002 of the terminal device 1000 is directly connected to the second signal pin 2001_1 of the OTG device 2000, and is directly grounded by means of the second resistor R_ID of the OTG device. Therefore, the first resistor Rup of the terminal device 1000 and the second resistor R_ID of the OTG device 2000 divide a voltage, and a voltage applied to the second resistor R_ID is the voltage on the second ID signal pin 2001_1, and is also the voltage on the first ID signal pin 1002_1. Therefore, the voltage applied to the second resistor R_ID may be obtained by obtaining the voltage value of the first ID signal pin 1002_1, and then the resistance value of the second resistor may be determined according to a current, or a ratio of the voltage value to the resistance value of the resistor.

In some feasible implementation manners, when the sampling interface of the ADC in the processor 1001 built in the terminal device 1000 learns that the voltage value of the first ID signal pin 1002_1 is not zero, the terminal device determines according to the voltage value of the first ID signal pin and the voltage value of the power supply, the voltage value applied to the first resistor Rup, which is assumed to be V1. The terminal device 1000 may further determine, according to the voltage value V1 applied to the first resistor Rup and the resistance value of the first resistor, which is assumed to be R1, a current I flowing through the first resistor Rup, where I=V1/R1. In specific implementation, the first resistor Rup and the second resistor R_ID are two resistors in a same branch; therefore, the current flowing through the first resistor Rup is also a current flowing through the second resistor R_ID, that is, the current flowing through the second resistor R_ID is also I. The terminal device 1000 determines the resistance value of the second resistor R_ID according to the voltage value V1 applied to the first resistor Rup and the resistance value R1 of the first resistor, and in combination with the voltage applied to the second resistor R_ID (that is, the voltage value of the first ID signal pin, which is assumed to be V2, where V1+V2=VCC), where R2=V2/I.

S203: Determine a device type of the OTG device according to the resistance value of the second resistor, and send the device type of the OTG device to the USB_PHY module by using the GPIO module, so as to trigger, by using the USB_PHY module, a USB OTG protocol stack to load a driver or a configuration corresponding to the device type.

In some feasible implementation manners, after determining the resistance value of the second resistor R_ID of the OTG device 2000, the terminal device determines the device type of the OTG device 2000 according to the resistance value of the second resistor R_ID, and sends the device type of the OTG device 2000 to the USB_PHY module by using the GPIO module, and then triggers, by using the USB_PHY module, a USB OTG protocol stack to load a driver or configuration corresponding to the device type of the OTG device 2000. Specifically, the GPIO module may inform the USB_PHY module of the device type of the OTG device 2000 by transmitting a signal of a handshake instruction, the USB OTG protocol stack is triggered by using the USB_PHY module to load the corresponding driver or configuration, and the terminal device 1000 may transfer data to the OTG device 2000 by using the loaded driver or configuration.

In this embodiment of the present invention, a terminal device may determine, according to a level of a first ID signal pin of a USB connector, that a connected USB device is an OTG device, then weaken an ID signal for a USB_PHY by using a GPIO module, and thereby inform, by using the USB_PHY, a protocol stack that the connected USB device is an OTG device, the GPIO module may further inform the USB_PHY module of the device type of the OTG device by transmitting a signal of a handshake instruction, the USB OTG protocol stack is triggered by using the USB_PHY module to load a corresponding driver or configuration, so as to support data transmission with the OTG device. In the prior art, an ID signal interface of a USB_PHY module is directly connected to a USB connector, a level of an ID signal pin of the USB connector is directly obtained by means of the ID signal interface of the USB_PHY, and whether a connected USB device is an OTG device is determined according to a level change of the USB interface. However, the interface of the USB_PHY cannot determine a device type of an OTG device according to a level of the USB device, and operations are inflexible.

In this embodiment of the present invention, when a USB device is connected, a terminal device determines, according to a level change of an ID signal pin of a first USB connector, whether the connected USB device is an OTG device. When the connected USB device is an OTG device, the terminal device determines, according to a voltage value of the ID signal pin of the first USB connector connected to the USB device and in combination with a resistance value of a first resistor Rup built in the terminal device and a voltage of a power supply, a resistance value of a second resistor R_ID built in the OTG device, and then determines a device type of the OTG device according to the resistance value of the resistor R_ID. The terminal device further transfers the device type of the OTG device to a USB OTG protocol stack by using a GPIO module and a USB_PHY module, and transfer data to the OTG device by using the USB OTG protocol stack. The USB OTG device identification system described in this embodiment of the present invention can support a standard protocol, and can further improve operation flexibility of OTG device identification, and enhance convenience of data interaction between the terminal device and the OTG device.

Referring to FIG. 5, FIG. 5 is a schematic structural diagram of an embodiment of a terminal device according to an embodiment of the present invention. The terminal device 1000 provided in this embodiment of the present invention includes a processor 1001, a first USB connector 1002, and a first resistor Rup.

The processor 1001 includes:
an ADC, a GPIO module, and a USB_PHY module connected to the GPIO module, where pins of the first USB connector 1002 include a first ID signal pin 1002_1, and
one end of the first ID signal pin 1002_1 is separately connected to the ADC and the GPIO module, and is connected to a power supply VCC by means of the first resistor Rup, and the other end of the first ID signal pin 1002_1 is connected to an OTG device, where
when the first ID signal pin is connected to an OTG device, the terminal device obtains a voltage value of the first ID signal pin by using the ADC;
if the voltage value is not zero, the terminal device determines a resistance value of a second resistor of the OTG device according to the voltage value, a voltage value of the power supply, and a resistance value of the first resistor; and
the terminal device determines a device type of the OTG device according to the resistance value of the second resistor, and sends the device type of the OTG device to the USB_PHY module by using the GPIO module, so as to trigger, by using the USB_PHY module, a USB OTG protocol stack to load a driver or a configuration corresponding to the device type.

In some feasible implementation manners, the terminal device 1000 is specifically configured to:
if the voltage value of the first ID signal pin is not zero, determine a voltage value applied to the first resistor according to the voltage value of the first ID signal pin and the voltage value of the power supply; and
determine the resistance value of the second resistor according to the voltage value applied to the first resistor and the resistance value of the first resistor and in combination with the voltage value of the first ID signal pin.

In some feasible implementation manners, the terminal device 1000 is further configured to:
if the voltage value is zero, determine that the OTG device is a standard OTG device; and
trigger, by using the USB_PHY module, the USB OTG protocol stack to load a driver or a configuration corresponding to the standard OTG device.

In some feasible implementation manners, before the OTG device is connected to the terminal device, the first ID signal pin is unconnected, where
when the first ID signal pin is unconnected, a level of the first ID signal pin is in a high-impedance state.

In some feasible implementation manners, the terminal device 1000 is further configured to:
when the ADC detects that the level of the first ID signal pin is in a low-level state, determine that the first ID signal pin is connected to an OTG device.

In some feasible implementation manners, the pins of the forgoing first USB connector 1002 further include a data transmission pin;
the data transmission pin is connected to the USB_PHY module; and
the terminal device is further configured to:
   process input data or output data from the data transmission pin of the first USB connector by using the USB_PHY module.

In some feasible implementation manners, the terminal device provided in this embodiment of the present invention may execute the specific implementation manners for the terminal device described in the USB OTG device identification system provided in the foregoing embodiment of the present invention, and for a specific implementation process for the terminal device, refer to steps S201 to S203 in the foregoing embodiment, which is not described herein again.

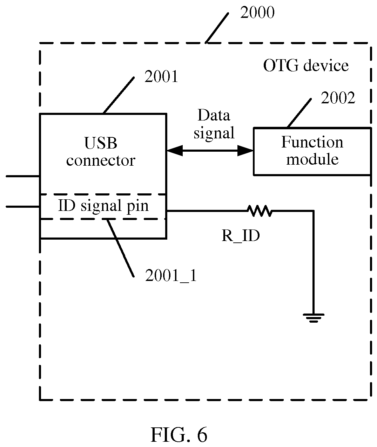

Referring to FIG. 6, FIG. 6 is a schematic structural diagram of an embodiment of an OTG device according to an embodiment of the present invention. The OTG device 2000 provided in this embodiment of the present invention includes a second USB connector 2001, a second resistor R_ID, and a functional module 2002, where pins of the second USB connector 2001 include a second ID signal pin 2001_1, and
one end of the second ID signal pin 2001_1 is connected to a first ID signal pin of a terminal device, and the other end of the second ID signal pin 2001_1 is grounded by means of the second resistor R_ID.

In some feasible implementation manners, the pins of the second USB connector 2001 further include a data transmission pin;
the data transmission pin is connected to the functional module; and
the functional module is configured to process input data or output data from the data transmission pin of the second USB connector.

The OTG device provided in this embodiment of the present invention is the OTG device described in the USB OTG device identification system provided in the foregoing embodiment of the present invention, and for a connection relationship between the foregoing OTG device and a terminal device and a specific implementation manner of OTG device identification, refer to steps S201 to S203 in the foregoing embodiment, which are not described herein again.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention.

## Claims

1. A terminal device (1000), comprising a processor (1001), a first Universal Serial Bus USB connector (1002), and a first resistor, wherein the processor (1000) comprises:
an analog to digital converter ADC, a general purpose input/output GPIO module, and a USB physical layer USB_PHY module connected to the GPIO module, wherein pins of the first USB connector comprise a first ID signal pin (1002_1);
one end of the first ID signal pin (1002_1) is separately connected to the ADC and the GPIO module, and is connected to a power supply by means of the first resistor, and the other end of the first ID signal pin (1002_1) is connected to an OTG device (2000);
when the first ID signal pin (1002_1) is connected to a second ID signal pin (2001_1) of the OTG device (2000), the terminal device (1000) obtains a voltage value of the first ID signal pin (1002_1) by using the ADC; **characterized by**,
if the voltage value is not zero, the terminal device (1000) determines a resistance value of a second resistor of the OTG device (2000) according to the voltage value, a voltage value of the power supply, and a resistance value of the first resistor; and
the terminal device (1000) determines a device type of the OTG device (2000) according to the resistance value of the second resistor, and sends the device type of the OTG device (2000) to the USB_PHY module by using the GPIO module, wherein the USB_PHY module is configured to support a USB standard interface to process output data or input data from the first USB connector, and triggers, by using the USB_PHY module, a USB OTG protocol stack to load a driver or a configuration corresponding to the device type;
if the voltage value is zero, determining that the OTG device (2000) is a standard OTG device; and triggering, by using the USB_PHY module, the USB protocol stack to load a driver or a configuration corresponding to the standard OTG device.

2. The terminal device according to claim 1, wherein the terminal device (1000) is specifically configured to:
if the voltage value of the first ID signal pin (1002_1) is not zero, determine a voltage value applied to the first resistor according to the voltage value of the first ID signal pin (1002_1) and the voltage value of the power supply; and
determine the resistance value of the second resistor according to the voltage value applied to the first resistor and the resistance value of the first resistor and in combination with the voltage value of the first ID signal pin (1002_1).

3. The terminal device according to any one of claims 1 to 2, wherein before the OTG device (2000) is connected to the terminal device (1000), the first ID signal pin (1002_1) is unconnected, wherein
when the first ID signal pin (1002_1) is unconnected, a level of the first ID signal pin (1002_1) is in a high-impedance state.

4. The terminal device according to claim 3, wherein the terminal device (1000) is further configured to:
when the ADC detects that the level of the first ID signal pin (1002_1) is in a low-level state, determine that the first ID signal pin (1002_1) is connected to the OTG device (2000).

5. The terminal device according to any one of claims 1 to 4, wherein the pins of the first USB connector further comprise a data transmission pin;
the data transmission pin is connected to the USB_PHY module; and
the terminal device (1000) is further configured to:
process input data or output data from the data transmission pin of the first USB connector by using the USB_PHY module.

6. A USB OTG device identification system, comprising the terminal device (1000) according to any one of claims 1 to 5 and an On-The-Go, OTG device (2000), wherein
the OTG device (2000) comprises a second USB connector (2001), wherein pins of the second USB connector comprise the second ID signal pin (2001_1), one end of the second ID signal pin (2001_1) is connected to the first ID signal pin (1002_1), and the other end of the second ID signal pin (2001_1) is grounded by means of a second resistor.

## Patentansprüche

1. Endgerätvorrichtung (1000), umfassend einen Prozessor (1001), einen ersten universellen seriellen Bus-, USB-Verbinder (1002) und einen ersten Widerstand, wobei der Prozessor (1000) Folgendes umfasst:
einen Analog-zu-Digital-Wandler, ADC, ein Allzweck-Eingangs-/Ausgangs-, GPIO-Modul und ein USB-Bitübertragungsschicht-, USB_PHY-Modul, das mit dem GPIO-Modul verbunden ist, wobei Stifte des ersten USB-Verbinders einen ersten ID-Signalstift (1002_1) umfassen;
wobei ein Ende des ersten ID-Signalstifts (1002_1) separat mit dem ADC und dem GPIO-Modul verbunden ist und mit einer Leistungsversorgung mittels des ersten Widerstands verbunden ist, und das andere Ende des ersten ID-Signalstifts (1002_1) mit einer OTG-Vorrichtung (2000) verbunden ist;
wobei, wenn der erste ID-Signalstift (1002_1) mit einem zweiten ID-Signalstift (2001_1) der OTG-Vorrichtung (2000) verbunden ist, die Endgerätvorrichtung (1000) einen Spannungswert des ersten ID-Signalstifts (1002_1) unter Verwendung des ADC erhält; **gekennzeichnet durch**:
wenn der Spannungswert nicht null ist, bestimmt die Endgerätvorrichtung (1000) einen Widerstandswert eines zweiten Widerstands der OTG-Vorrichtung (2000) gemäß dem Spannungswert, einem Spannungswert der Leistungsversorgung und einem Widerstandswert des ersten Widerstands; und
die Endgerätvorrichtung (1000) bestimmt einen Vorrichtungstyp der OTG-Vorrichtung (2000) gemäß dem Widerstandswert des zweiten Widerstands und sendet den Vorrichtungstyp der OTG-Vorrichtung (2000) an das USB_PHY-Modul unter Verwendung des GPIO-Moduls, wobei das USB_PHY-Modul dazu konfiguriert ist, eine USB-Standardschnittstelle zu unterstützen, um Ausgangsdaten oder Eingangsdaten von dem ersten USB-Verbinder zu verarbeiten, und, unter Verwendung des USB_PHY-Moduls, einen USB-OTG-Protokollstapel auslöst, um einen Treiber oder eine Konfiguration, der bzw. die dem Vorrichtungstyp entspricht, zu laden;
wenn der Spannungswert null ist, Bestimmen, dass die OTG-Vorrichtung (2000) eine Standard-OTG-Vorrichtung ist; und Auslösen, unter Verwendung des USB_PHY-Moduls, des USB-Protokollstapels, um einen Treiber oder eine Konfiguration, der bzw. die der Standard-OTG-Vorrichtung entspricht, zu laden.

2. Endgerätvorrichtung nach Anspruch 1, wobei die Endgerätvorrichtung (1000) insbesondere zu Folgendem konfiguriert ist:
wenn der Spannungswert des ersten ID-Signalstifts (1002_1) nicht null ist, Bestimmen eines an den ersten Widerstand angelegten Spannungswerts gemäß dem Spannungswert des ersten ID-Signalstifts (1002_1) und dem Spannungswert der Leistungsversorgung; und
Bestimmen des Widerstandswerts des zweiten Widerstands gemäß dem an den ersten Widerstand angelegten Spannungswert und dem Widerstandswert des ersten Widerstands und in Kombination mit dem Spannungswert des ersten ID-Signalstifts (1002_1).

3. Endgerätvorrichtung nach einem der Ansprüche 1 bis 2, wobei, bevor die OTG-Vorrichtung (2000) mit der Endgerätvorrichtung (1000) verbunden wird, der erste ID-Signalstift (1002_1) nicht verbunden ist, wobei,
wenn der erste ID-Signalstift (1002_1) nicht verbunden ist, ein Pegel des ersten ID-Signalstifts (1002_1) in einem hochohmigen Zustand ist.

4. Endgerätvorrichtung nach Anspruch 3, wobei die Endgerätvorrichtung (1000) ferner zu Folgendem konfiguriert ist:
wenn der ADC detektiert, dass der Pegel des ersten ID-Signalstifts (1002_1) in einem niederohmigen Zustand ist, Bestimmen, dass der erste ID-Signalstift (1002_1) mit der OTG-Vorrichtung (2000) verbunden ist.

5. Endgerätvorrichtung nach einem der Ansprüche 1 bis 4, wobei die Stifte des ersten USB-Verbinders ferner einen Datenübertragungsstift umfassen;
wobei der Datenübertragungsstift mit dem USB_PHY-Modul verbunden ist; und
wobei die Endgerätvorrichtung (1000) ferner zu Folgendem konfiguriert ist:
Verarbeiten von Eingangsdaten oder Ausgangsdaten von dem Datenübertragungsstift des ersten USB-Verbinders unter Verwendung des USB_PHY-Moduls.

6. USB-OTG-Vorrichtungsidentifikationssystem, umfassend die Endgerätvorrichtung (1000) nach einem der Ansprüche 1 bis 5 und eine "On-The-Go"-, OTG-Vorrichtung (2000), wobei
die OTG-Vorrichtung (2000) einen zweiten USB-Verbinder (2001) umfasst, wobei Stifte des zweiten USB-Verbinders den zweiten ID-Signalstift (2001_1) umfassen, wobei ein Ende des zweiten ID-Signalstifts (2001_1) mit dem ersten ID-Signalstift (1002_1) verbunden ist und das andere Ende des zweiten ID-Signalstifts (2001_1) mittels eines zweiten Widerstands geerdet ist.

## Revendications

1. Dispositif terminal (1000), comprenant un processeur (1001), un premier connecteur de bus série universel USB (1002), et une première résistance, le processeur (1000) comprenant :
un convertisseur analogique-numérique CAN, un module d'entrée/sortie d'usage général GPIO, et un module de couche physique USB USB_PHY connecté au module GPIO, les broches du premier connecteur USB comprenant une première broche de signal ID (1002_1) ;
une extrémité de la première broche de signal ID (1002_1) étant connectée séparément au CAN et au module GPIO, et étant connectée à une alimentation électrique au moyen de la première résistance, et l'autre extrémité de la première broche de signal ID (1002_1) étant connectée à un dispositif OTG (2000) ;
lorsque la première broche de signal ID (1002_1) est connectée à une seconde broche de signal ID (2001_1) du dispositif OTG (2000), le dispositif terminal (1000) obtenant une valeur de tension de la première broche de signal ID (1002_1) en utilisant le CAN ;
**caractérisé par**,
si la valeur de tension n'est pas nulle, le fait que le dispositif terminal (1000) détermine une valeur de résistance d'une seconde résistance du dispositif OTG (2000) en fonction de la valeur de tension, d'une valeur de tension de l'alimentation électrique et d'une valeur de résistance de la première résistance ; et
le fait que le dispositif terminal (1000) détermine un type de dispositif du dispositif OTG (2000) en fonction de la valeur de résistance de la seconde résistance, et envoie le type de dispositif du dispositif OTG (2000) au module USB_PHY en utilisant le module GPIO, le module USB_PHY étant configuré pour prendre en charge une interface standard USB pour traiter des données de sortie ou des données d'entrée provenant du premier connecteur USB, et déclenche, en utilisant le module USB_PHY, une pile de protocole USB OTG pour charger un pilote ou une configuration correspondant au type de dispositif ;
si la valeur de tension est nulle, la détermination que le dispositif OTG (2000) est un dispositif OTG standard ; et le déclenchement, en utilisant le module USB_PHY, de la pile de protocole USB pour charger un pilote ou une configuration correspondant au dispositif OTG standard.

2. Dispositif terminal selon la revendication 1, le dispositif terminal (1000) étant spécifiquement configuré pour :
si la valeur de tension de la première broche de signal ID (1002_1) n'est pas nulle, déterminer une valeur de tension appliquée à la première résistance en fonction de la valeur de tension de la première broche de signal ID (1002_1) et de la valeur de tension de l'alimentation électrique ; et
déterminer la valeur de résistance de la seconde résistance en fonction de la valeur de tension appliquée à la première résistance et de la valeur de résistance de la première résistance et en combinaison avec la valeur de tension de la première broche de signal ID (1002_1).

3. Dispositif terminal selon l'une quelconque des revendications 1 et 2, avant que le dispositif OTG (2000) ne soit connecté au dispositif terminal (1000), la première broche de signal ID (1002_1) n'étant pas connectée,
lorsque la première broche de signal ID (1002_1) n'est pas connectée, un niveau de la première broche de signal ID (1002_1) étant dans un état de haute impédance.

4. Dispositif terminal selon la revendication 3, le dispositif terminal (1000) étant en outre configuré pour :
lorsque le CAN détecte que le niveau de la première broche de signal ID (1002_1) est dans un état de bas niveau, déterminer que la première broche de signal ID (1002_1) est connectée au dispositif OTG (2000).

5. Dispositif terminal selon l'une quelconque des revendications 1 à 4, les broches du premier connecteur USB comprenant en outre une broche de transmission de données ;
la broche de transmission de données étant connectée au module USB_PHY ; et
le dispositif terminal (1000) étant en outre configuré pour :
traiter des données d'entrée ou des données de sortie provenant de la broche de transmission de données du premier connecteur USB en utilisant le module USB_PHY.

6. Système d'identification de dispositif USB OTG, comprenant le dispositif terminal (1000) selon l'une quelconque des revendications 1 à 5 et un dispositif « On-The-Go » OTG (2000),
le dispositif OTG (2000) comprenant un second connecteur USB (2001), les broches du second connecteur USB comprenant la seconde broche de signal ID (2001_1), une extrémité de la seconde broche de signal ID (2001_1) étant connectée à la première broche de signal ID (1002_1), et l'autre extrémité de la seconde broche de signal ID (2001_1) étant mise à la terre au moyen d'une seconde résistance.
